Europäisches Patentamt

(19) **European Patent Office**

Office européen des brevets

(11) Veröffentlichungsnummer: **0 014 256**
**B1**

(12) **EUROPÄISCHE PATENTSCHRIFT**

(45) Veröffentlichungstag der Patentschrift:
**30.11.83**

(51) Int. Cl.³: **B 60 C 11/00,** B 60 C 11/08

(21) Anmeldenummer: **79105264.0**

(22) Anmeldetag: **19.12.79**

(54) **Fahrzeugluftreifen.**

(30) Priorität: **09.02.79 DE 2904939**

(43) Veröffentlichungstag der Anmeldung:
**20.08.80 Patentblatt 80/17**

(45) Bekanntmachung des Hinweises auf die Patenterteilung:
**30.11.83 Patentblatt 83/48**

(84) Benannte Vertragsstaaten:
**AT CH DE FR GB IT NL**

(56) Entgegenhaltungen:
**DE - A - 1 605 649**
**DE - A - 2 337 613**
**DE - A - 2 340 761**
**DE - A - 2 722 359**
**FR - A - 2 216 130**
**FR - A - 2 311 669**
**GB - A - 1 099 338**

(73) Patentinhaber: **Continental Gummi-Werke**
**Aktiengesellschaft, Königsworther Platz 1 Postfach 169,**
**D-3000 Hannover 1 (DE)**

(72) Erfinder: **Bachmann, Erwin, Weidenstrasse 8,**
**D-3004 Isernhagen 2 (DE)**

## Fahrzeugluftreifen

Die Erfindung betrifft einen grobstolligen Fahrzeugluftreifen, insbesondere Traktorreifen, mit einem in Umfangsrichtung zugfesten Gürtel zwischen Lauffläche und Karkasse und sich im wesentlichen in Reifenumfangsrichtung erstreckenden Rippen zwischen den die eigentliche Lauffläche bildenden schräg oder quer zur Reifenumfangsrichtung verlaufenden Stollen, wobei die Stollen eine wesentlich größere Höhe haben als die zwischen ihnen befindlichen Rippen, die im Bereich der Gürtelränder liegen.

Es ist bekannt, zwischen den in Umfangsrichtung aufeinanderfolgenden Stollen etwa in Reifenumfangsrichtung verlaufende Kanten vorzusehen, zwischen denen die Außenfläche des Luftreifens konkav oder geradlinig verläuft. Diese Kanten und die hierzwischen befindlichen Flächen sollen die Selbstreinigung des Reifens verbessern.

Die Erfindung geht von der Erkenntnis aus, daß der bei Fahrzeugluftreifen bekannte, in der Reifenzenitpartie befindliche zugfeste Gürtel in der Lage ist, den zwischen den hohen Stollen befindlichen Teil des Reifens, also den Profilgrund gegen mechanische Einwirkungen zu schützen. Entscheidend ist hierbei aber, daß die Gürtelbreite nicht beliebig groß gewählt werden kann und bei vergleichsweise großer Gürtelbreite vor allen Dingen bei landwirtschaftlichen Reifen seitlich Zonen verbleiben, die durch den Gürtel nicht geschützt werden können. Diese ungeschützten Teile des Reifenkörpers können nicht nur zu Perforationen, sondern auch im Grenzbereich der Gürtelränder zu Lösungserscheinungen führen.

Aus der DE-A-2 340 761 ist ein Reifen bekannt, bei dem zur Vermeidung von Rißbildungen im Seitenbereich neben dem Laufstreifen zwei zusätzliche Bauelemente vorhanden sind, nämlich eine Ausbauchung und ein Gummiflankensteg, die aus unverstärktem Gummiwerkstoff bestehen. Es ergibt sich der Nachteil, daß neben dem eigentlichen Laufstreifen zur Konfektion auf jeder Seite zwei weitere Gummistreifen einer anderen Zusammensetzung benötigt werden, so daß ein nicht unerheblicher zusätzlicher Fertigungsaufwand entsteht.

Der Erfindung liegt im wesentlichen die Aufgabe zugrunde, die zwischen den hohen Stollen des Reifens befindlichen, etwa in Reifenumfangsrichtung verlaufenden Rippen so auszubilden und so anzuordnen, daß die seitlich neben den Gürtelrändern befindlichen Reifenabschnitte gegen eine mechanische Einwirkung weitgehend geschützt sind; zugleich sollen in diesem Bereich auf einfache Weise unerwünschte Verformungen ausgeschaltet werden, um so Gürtelkantenlösungen und ähnliche Ablösungserscheinungen zu vermeiden.

Diese Aufgabe wird erfindungsgemäß dadurch gelöst, daß die Seitenfläche einer jeden Rippe gegenüber der Seitenfläche der Stollen zurückversetzt ist, daß die Seitenfläche der Rippen in einer senkrechten Ebene zur Hauptachse des Reifens oder auf der Mantelfläche eines Kegels liegt, dessen Grundfläche zur Mittelebene des Reifens gerichtet ist, daß das radial innere Ende einer jeden Rippe weiter radial außen liegt als das radial innere Ende der Seitenfläche der Stollen und daß die Stollen einen gegenseitigen Abstand haben, der größer ist als deren Breite in der Krone.

Demgemäß befinden sich die zu beiden Seiten des Reifens befindlichen Umfangsrippen zwar noch zwischen den Enden der hohen Stollen. Sie bedecken jedoch im wesentlichen die Schulterpartie des Reifenkörpers und können aus diesen Gründen einen wirksamen mechanischen Schutz für die Gürtelrandpartien bilden. Diese Rippen bilden auch eine wünschenswerte Versteifung zwischen den Stollen, um so im Bereich der Gürtelenden unerwünschte Verformungen und übermäßige Gürtelbeanspruchungen auszuschalten. Es versteht sich, daß zugleich Rißbildungen vermieden und ein Schutz der Karkasse erreicht wird. Diese Vorteile ergeben sich aufgrund einer besonders günstigen Formgestaltung der Rippen.

Hierbei wird davon ausgegangen, daß es nicht möglich ist, den Reifengürtel beliebig zu verbreitern, und es aus reifentechnischen Gründen vorteilhaft ist, den Gürtel um ein geringes Maß schmaler zu machen als die Laufflächenpartie, die bei derartigen grobstolligen Reifen im wesentlichen durch die seitlich außen gelegenen Kanten der hohen Stollen begrenzt wird.

Es versteht sich, daß diese Schutz- und Versteifungswirkung der genannten Rippen nur dann eintreten kann, wenn die Rippen eine entsprechende Querschnittsform aufweisen und somit über eine ausreichend große Wandstärke verfügen, die im wesentlichen dann gegeben ist, wenn im Bereich der Rippen die Reifenwandung etwa um 50 bis 100% größer ist im Vergleich zu den übrigen Stellen in der Reifenzenitpartie.

Der Vorteil zusätzlicher Angriffsflächen im seitlichen Reifenprofil wird durch eine Zurückversetzung einer Seitenfläche einer Rippe gegenüber einer Fläche eines Stollens erzielt, so daß dem Reifen im weichen Sand eine zusätzliche Griffigkeit verliehen wird.

Weitere Einzelheiten der Erfindung werden anhand der Zeichnung erläutert, in der ein Ausführungsbeispiel dargestellt ist. Es zeigt

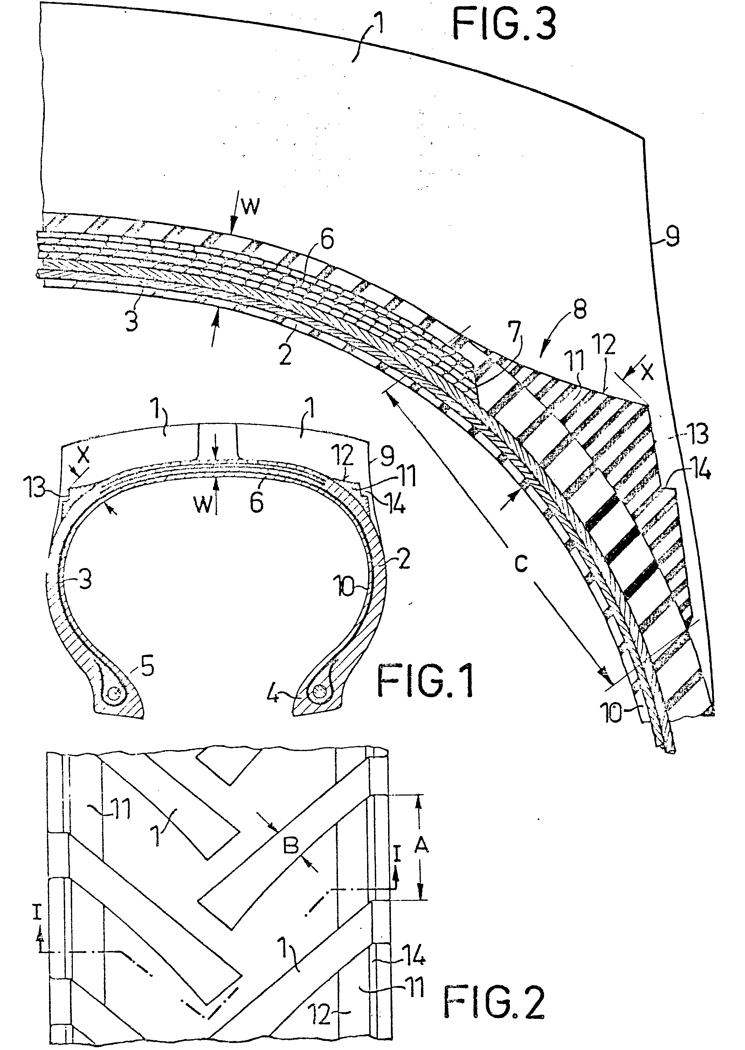

Fig. 1 einen grobstolligen Reifen für landwirtschaftliche Zwecke im Teilquerschnitt,

Fig. 2 den Reifen gemäß Fig. 1 in der Teildraufsicht und

Fig. 3 eine Schulterpartie des Reifens gemäß Fig. 1 im Schnitt, und zwar in vergrößerter Darstellung.

Der vornehmlich für Traktoren und ähnliche landwirtschaftliche Zugmaschinen verwendete Luftreifen hat V-förmig zueinander angeordnete Stollen 1, deren gegenseitiger Abstand — gemessen in Reifenumfangsrichtung — etwa drei- bis viermal größer ist als die Breite der Stollen in deren Krone. Diese Breite ist mit B bezeichnet, der gegenseitige Abstand mit A.

Der eigentliche Reifenkörper 2 ist durch eine Radialkarkasse 3 verstärkt, deren Enden in den Wülsten 4 durch Umschlingen der Wulstkerne 5 verankert sind.

Zwischen den Stollen 1 und der Karkasse 3 befindet sich ein in Umfangsrichtung zugfester, den Reifenkörper 2 im wesentlichen stabilisierender Gürtel 6 aus zwei oder mehreren Cordgewebelagen in links- und rechtssteigender Anordnung.

Der Gürtel 6 durchsetzt nur die Zenitpartie des Luftreifens. Seine Ränder 7 enden in der Reifenschulter 8, die jedoch noch von den Stollen 1 beidseitig überragt werden, wobei die seitlichen, etwa senkrechten Flächen 9 der Stollen 1 etwa tangential in die Reifenseitenwände 10 übergehen.

Zu beiden Seiten des Reifens und zu beiden Seiten des Gürtels 6, und zwar sich im wesentlichen an die Gürtelkanten 7 anschließend, ist der Reifenkörper 2 zwischen benachbarten Stollen 1 mit einer im wesentlichen dreiecksförmigen Rippe 11 versehen, die sich in Reifenumfangsrichtung erstreckt und einstückig in den verbreiterten Fuß der Stollen 1 übergeht, so daß der Grund zwischen benachbarten Stollen 1 im Bereich des Gürtels praktisch von dem Reifenkörper 2 und der am äußeren Umfang gelegenen Fläche 12 der Rippe 11 gebildet wird, deren seitlich außen gelegene Fläche 13 — gegebenenfalls mit einer Stufe 14 versehen — etwa parallel zur Seitenfläche 9 verläuft, jedoch geringfügig nach innen zurückgesetzt ist, in keinem Falle aber seitlich gegenüber der Fläche 9 vorspringt.

Durch diese Rippe 11 wird der Teil des Reifenkörpers 2 gegen äußere Einwirkungen geschützt, der von der Wurzel der Stollen 1 überbedeckt ist, jedoch von dem Gürtel 6 nicht mehr durchsetzt wird. Dieser Bereich ist mit C bezeichnet.

In dem Bereich C ist darüber hinaus durch die Rippe 11 die Wandstärke W des Reifenkörpers 2 um etwa 50 bis 100% vergrößert worden. Die größte Wandstärke X beträgt etwa das Doppelte des Wertes W.

## Patentansprüche

1. Grobstolliger Fahrzeugluftreifen, insbesondere Traktorreifen, mit einem in Umfangsrichtung zugfesten Gürtel (6) zwischen Lauffläche und Karkasse (3) und sich im wesentlichen in Reifenumfangsrichtung erstreckenden Rippen (11) zwischen den die eigentliche Lauffläche bildenden schräg oder quer zur Reifenumfangsrichtung verlaufenden Stollen (1), wobei die Stollen (1) eine wesentlich größere Höhe haben als die zwischen ihnen befindlichen Rippen (11), die im Bereich der Gürtelränder (7) liegen, dadurch gekennzeichnet, daß die Seitenfläche (13) einer jeden Rippen (11) gegenüber der Seitenfläche (9) der Stollen (1) zurückversetzt ist, daß die Seitenfläche (13) der Rippen (11) in einer senkrechten Ebene zur Hauptachse des Reifens oder auf der Mantelfläche eines Kegels liegt, dessen Grundfläche zur Mittelebene des Reifens gerichtet ist, daß das radial innere Ende einer jeden Rippe (11) weiter radial außen liegt als das radial innere Ende der Seitenfläche (9) der Stollen (1) und daß die Stollen (1) einen gegenseitigen Abstand haben, der größer ist als deren Breite in der Krone.

2. Reifen nach Anspruch 1, dadurch gekennzeichnet, daß die Rippen (11) und die Stollen (1) aus dem Material ein und desselben Laufstreifens geformt sind.

## Claims

1. A pneumatic vehicle tyre having a coarse studded tread, more especially a tractor tyre, said tyre having a belt (6) which is disposed between the tread surface and carcase (3) and is substantially inextensible in the circumferential direction, and having ribs (11) which extend substantially in the circumferential direction of the tyre and which are disposed between the studs (1), such studs (1) forming the actual tread surface and extending diagonally or transversely to the circumferential direction of the tyre, wherein the studs (1) have a substantially greater height than the ribs (11) which are disposed between the studs (1) in the region of the belt edges (7), characterised in that the lateral surface (13) of each rib (11) is offset relative to the lateral surface (9) of the studs (1), in that the lateral surface (13) of the ribs (11) lies in a vertical plane relative to the main axis of the tyre or on the outer surface of a cone, the base surface of such a cone extending to the centre plane of the tyre, in that the radially inner end of each rib (11) is disposed further radially outwardly than the radially inner end of the lateral surface (9) of the studs (1), and in that the studs (1) are spaced from one another by a distance which is greater than the width of the studs (1) in the crown portion.

2. A tyre according to claim 1, characterised in that the ribs (11) and the studs (1) are formed from the material of one and the same tread strip.

## Revendications

1. Bandage pneumatique à grosses côtes de sculpture pour véhicules, en particulier bandage de tracteur, comportant une ceinture (6) résistante à la traction en direction périphérique entre la surface de roulement et la carcasse (3), et des nervures (11) s'étendant essentiellement suivant la direction périphérique du bandage entre les côtes de sculpture (1) formant la surface de roulement proprement dite et s'étendant obliquement ou transversalement à la direction périphé-

**0 014 256**

rique du bandage, tandis que les côtes de sculpture (1) ont une hauteur notablement plus grande que les nervures (11) se trouvant entre elles qui s'étendent dans la région des bords (7) de la ceinture, ledit bandage étant caractérisé en ce que la surface latérale (13) de chaque nervure (11) est décalée vers l'intérieur par rapport à la surface latérale (9) des côtes de sculpture (1); en ce que la surface latérale (13) des nervures (11) s'étend dans un plan perpendiculaire à l'axe principal du bandage ou sur la surface latérale d'un cône, dont la surface de base est orientée vers le plan médian du bandage, en ce que l'extrémité radialement intérieure de chaque nervure (11) est située radialement plus à l'extérieur que l'extrémité radialement intérieure de la surface latérale (9) des côtes de sculpture (1); et en ce que les côtes de sculpture (1) présentent entre elles une distance plus grande que leur largeur à leur crête.

2. Bandage suivant la revendication 1, caractérisé en ce que les nervures (11) et les côtes de sculpture (1) sont formées à partir du matériau d'une seule et même bande de roulement.

0 014 256

FIG.3

FIG.1

FIG.2